# EUROPÄISCHE PATENTSCHRIFT

(11) **EP 1 806 258 B1**
(45) Veröffentlichungstag und Bekanntmachung des Hinweises auf die Patenterteilung: **08.07.2015**
(21) Anmeldenummer: 06022894.7
(22) Anmeldetag: 03.11.2006
(51) Int. Cl.: B60N 2/56

(54) **Klimatisiertes Polsterteil, insbesondere für einen "passiven Klimasitz"**
Air-conditioned upholstered element, particularly for a passive air-conditioned seat
Pièce de capitonnage climatisé, en particulier pour un siège passif climatisé

(30) Priorität: 10.01.2006 DE 102006001225
(43) Veröffentlichungstag der Anmeldung: 11.07.2007
(73) Patentinhaber: Volkswagen Aktiengesellschaft, 38440 Wolfsburg (DE)
(72) Erfinder: Schweissgut, Jakob, 38542 Leiferde (DE); Sewing, Andrea, 38554 Weyhausen (DE)

(56) Entgegenhaltungen:
- WO-A-03/011633
- DE-A1- 10 313 013
- DE-A1- 10 351 805
- DE-A1- 19 927 232

## Beschreibung

Die Erfindung betrifft ein Polsterteil für einen klimatisierbaren Fahrzeugsitz mit den im Oberbegriff des Anspruchs 1 und 9 genannten Merkmalen.

Die EP 1 068 094 B1 beschreibt bereits ein Sitzpolsterteil, wobei das Basisteil aus einem einstückig aus Kunststoff geschäumten Kernteil besteht. Für den Klimakomfort weist das Kernteil Löcher auf, die sich vollständig durch das Kerriteil hindurch erstrecken und somit beidseitig randoffen sind. Die durchgehenden Löcher erlauben einen Luft- und Feuchtigkeitsaustausch durch das Kernteil hindurch, und zwar auch ohne aktive Mittel, wie Ventilatoren oder dergleichen. Es handelt sich daher um ein rein passives Klimasystem, welches durch Vermeidung der aktiven Mittel grundsätzlich einfacher und wirtschaftlicher als aktive Klimasysteme ist. Auf dem Kernteil ist eine Deckschicht angeordnet, die einerseits eine Sitzdruckverteilung und andererseits einen Feuchtigkeitstransport durch die Löcher des Kernteils ermöglichen soll. Dazu soll die Deckschicht aus einem Material bestehen, welches Feuchtigkeit schnell aufnehmen und auch wieder abgeben kann.

Eine gattungsgemässe Weiterentwicklung geht aus der WO 03/011633 A1 hervor, die ein Polsterteil für ein unteres Sitzteil und/oder eine Rückenlehne für einen klimatisierbaren Fahrzeugsitz beschreibt. Das Polsterteil weist ein elastisches, luftdurchlässiges Polster-Basisteil und eine flächig auf dem Basisteil angeordnete, luftdurchlässige Klimaschicht auf. Die Klimaschicht besteht aus mindestens zwei Teilschichten, und zwar einer dem Basisteil zugekehrten Unterschicht und eine auf der Unterschicht liegenden Oberschicht, wobei die Oberschicht aus einem feuchtigkeitsabsorbierenden Material besteht. Außerdem lehrt die WO 03/011633 A1, dass zwischen dem Basisteil und der Unterschicht zusätzlich eine Zwischenschicht anordbar ist.

Ausgehend von den bekannten Lösungen besteht jedoch noch Bedarf neben der weiteren notwendigen Verbesserung der Stabilität die Luftverteilung in einem Polsterteil zu optimieren, da gerade bei passiven Klimasitzen, wie hier vorliegend, eine optimale Luftverteilung von besonderer Bedeutung ist. Bei den benannten beiden Lösungen hat sich nämlich herausgestellt, dass die Vielzahl angeordnet Löcher in Kombination mit der ebenfalls instabilen Klimaschicht einen zu weichen Fahrzeugsitz insbesondere im Sitzteil hervorbringt, der bei Dauerbelastung keine ausreichende Formstabilität aufweist.

Der Erfindung liegt somit die Aufgabe zugrunde, ein Polsterteil insbesondere für einen Fahrzeugsitz zu schaffen, welches optimierte Eigenschaften hinsichtlich Stabilität und Klimatisierung aufweist.

Die Aufgabe wird mit den Merkmalen des Anspruchs 1 gelöst.

Zur weiteren Regulierung der Luftdurchlässigkeit soll die Luft nicht nur im Basisteil durch die Lufthauptkanäle und Verteilkanäle optimal flächig ausströmen, sondern die Oberschichtlagen der Oberschicht erhalten zusätzlich zu der bereits materialbedingten Luftdurchlässigkeit eine entsprechende Lochung (Perforation), so dass ein optimaler Luftaustausch zwischen Basisteil und Oberschicht erreicht werden kann. Dabei ist die Perforation der ersten, dem Basisteil zugekehrten ersten Oberschichtlage gegebenenfalls anders ausführbar als die Perforation der zweiten Oberschichtlage, die auf der ersten Oberschichtlage angeordnet ist.

In bevorzugter Ausgestaltung ist zwischen Basisteil und erster Oberschichtlage zusätzlich ein Heizleiter anordbar, der vorzugsweise die Perforation der ersten Oberschichtlage nicht verdeckt.

Ferner ist die erste Oberschichtlage entweder zweilagig getrennt ausgeführt und ist ein Schaum- und die zweite Oberschichtlage ein Bezugsmaterial, vorzugsweise eine textile Oberware oder ein Leder oder aber die Oberschicht ist zwar zweilagig aber das Bezugsmaterial, vorzugsweise wiederum eine textile Oberware oder ein Leder, ist basisteilseitig mit einem ankaschiertem Schaum versehen.

Die Anordnung aus Lufthauptkanälen und Verteilkanälen wird nachfolgend als LuftVerteilsystem bezeichnet und bildet auf der dafür vorgesehenen Fläche des Polsterteiles unterhalb der ersten Oberschichtlage eine netzartige Struktur aus. Die Verteilkanäle sind dabei vorzugsweise sternförmig, also in mehreren Abgängen von einem zu einem nächsten Lufthauptkanal geführt. Selbstverständlich sind auch zeilen- und oder spaltenweise Anordnungen in versetzter oder nicht versetzter Ausbildung innerhalb der Zeilen und/oder Spalten der Lufthauptkanäle ausführbar, die dann mit Verteilkanälen entsprechend verbunden sind, wobei beispielsweise mehrere Verteilkanäle zwischen jeweils zwei Lufthauptkanälen anordbar sind, und stets die Stabilität des Basisteiles berücksichtigt werden sollte. Diagonale Anordnungen oder Anordnungen von Lufthauptkanälen, die spezifisch für bestimmte Bereiche der Auflage des Sitzenden vorgesehen sind, z.B. kreisförmige Anordnungen im Sitzhöckerbereich eines Sitzteiles und/oder längliche Anordnungen im Wirbelsäulenbereich einer Rückenlehne können unter Verbindung mit den Verteilkanälen erfindungsgemäß ebenfalls adaptiert an die in diesen Zonen gewünschten Klimabedingungen durch die Variabilität der Anordnung der Lufthauptkanäle und/oder Verteilkanäle leicht variabel angepasst werden.

Die erfindungsgemäße Lösung kann auch für ein Polsterteil eingesetzt werden, welches ein elastisches und luftdurchlässiges Polster-Basisteil und eine flächig zumindest teilweise auf dem Basisteil angeordnete luftdurchlässige Klimaschicht aufweist. Dabei kann die Klimaschicht eine oder mehrere Klimateilschichten umfassen, wobei in einer zweischichtigen Ausführung eine zweite Klimateilschicht dem Basisteil und eine erste Klimateilschicht einer ein- oder mehrschichtigen Oberschicht zugekehrt ist. In einer einschichtigen Ausführung ist das Luftverteilsystem selbstverständlich der dann angeordneten einzigen Klimateilschicht zugekehrt.

Das erfindungsgemäße Luftverteilsystem im Basisteil ist also für eine erste Ausführungsform aus Basisteil mit integriertem Luftverteilsystem und Oberschicht (ein- oder mehrschichtig) und für eine zweite Ausführungsform aus Basisteil mit integriertem Luftverteilsystem und Oberschicht (ein- oder mehrschichtig)-und dazwischen angeordneter Klimaschicht (ein- oder mehrschichtig) anwendbar.

Bei entsprechender Auslegung des Luftverteilsystems kann in einer einfachen und preiswerten Ausführung generell auf die Ausbildung einer Klimaschicht verzichtet werden, da die Feuchtigkeit, die sonst vor allem durch die Klimaschicht absorbiert werden soll, in der wirksamen Ausführung des Luftverteilsystems nicht so sehr benötigt wird. Ein einfacher herzustellender und preiswerterer passiver Klimasitz ist die Folge. Unabhängig davon kann das Luftverteilsystem aber auch mit der Klimaschicht kombiniert werden, wodurch sich die Wirkungen entsprechend addieren. Diese Lösung mit Klimaschicht wird nachfolgend näher definiert, wobei hier vor allem eine zweischichtige Ausführung dargelegt wird.

Die in der zweiten Ausführungsform anordbare Klimaschicht - ein- oder zweischichtig - sollte zur Vermeidung von Stabilitätsnachteilen eine hohe Dauerfestigkeit mit einem Dickeverlust < 15% aufweisen. Im Zusammenhang mit der erhöhten Stabilität des erfindungsgemäßen Basisteiles werden damit Stabilitätsnachteile einer doch eher weicheren Klimaschicht auf ein Minimum reduziert.

Für den Schichtaufbau gilt, dass die erste Klimateilschicht aus einem feuchtigkeitsabsorbierenden Material besteht, wobei hier insbesondere Aktivkohle einsetzbar ist, die vorzugsweise in Partikelform in die erste Klimateilschicht einbringbar ist. Ferner kann die erste Klimateilschicht zumindest anteilig ein Vlies, ein hydrophiliertes Textilmaterial oder Gummihaar enthalten.

Die erste Klimateilschicht kann aus einem Trägermaterial ausgeführt werden, welches wiederum ein Schaum ist, in dem Aktivkohle zumindest anteilig eingebracht ist, wobei das Trägermaterial zudem mit einem Vlies vernadelt ausgeführt ist. Bei der ersten Klimateilschicht kann es sich um ein auch relativ weiches Material mit einer Stauchhärte von insbesondere etwa 4 - 6 kPa mit einer hohen Luftdurchlässigkeit handeln, wobei die Luftdurchlässigkeit größer als 500 I/dm²/min sein sollte.

Für die zweite Klimateilschicht, die dem Basisteil zugewandt ist, bietet sich ein ebenfalls relativ weiches gering verpresstes Gummihaar-Material an, welches mit einem Raumgewicht von insbesondere etwa im Bereich von 500 - 800 kg/m³ ausgeführt ist. Die zweite Klimateilschicht ist auch aus einem Kunststoff-Gewirke mit einer hohen Stauchhärte von insbesondere etwa 5 - 20 kPa ausführbar.

Die erste und/oder zweite Klimateilschicht sollte zudem eine hohe elastische Rückstellkraft und eine hohe Luft- und Wasserdampfdurchlässigkeit aufweisen.

In einer dritten Ausführungsform liegt zwischen dem Basisteil und der zweiten Klimateilschicht der Klimaschicht eine zusätzliche Zwischenklimaschicht. Diese Zwischenklimaschicht ist selbstverständlich ebenfalls ein luftdurchlässiges Material, wobei vorteilhafterweise vorgesehen ist, dass die zweite Klimateilschicht relativ gesehen weicher ist als die Zwischenklimaschicht, so dass bei einer Sitzbelastung, insbesondere einer Dauersitzbelastung, ein Eindrücken der zweiten Klimateilschicht und insbesondere der Zwischenklimaschicht in die Lufthauptkanäle beziehungsweise Verteilkanäle des Basisteiles vermieden wird.

Eine vorteilhafte Zwischenklimaschicht ist aus hochverpresstem Gummihaar mit einem höheren Raumgewicht im Bereich von 600 - 1.000 kg/m³, insbesondere um etwa 1.000 kg/m³ ausführbar. Alternativ dazu kann es sich auch um ein stark verpresstes, insbesondere perforiertes Vliesmaterial handeln.

Ferner kann alternativ die Zwischenklimaschicht aus einer relativ dünnen perforierten Kunststoffplatte ausgebildet werden, so dass, wenn eine höhere Stabilität erforderlich ist, eine Auswahl von verschiedenen Materialien zur Verfügung steht.

Die beschriebenen Ausführungsformen eignen sich insbesondere für den Spiegel eines Sitzteiles beziehungsweise den Spiegel einer Rückenlehne, wobei die so genannten Sitzwangen entweder in den schichtenartigen Aufbau miteinbezogen werden können oder einen eigenen oder gar keinen Schichtenaufbau aufweisen.

Da die Lufthauptkanäle ausgehend von einer Sitzstruktur des Fahrzeugsitzes gegebenenfalls in den Seitenwangenbereichen, da diese außerhalb der Sitzstruktur ausgebildet sind, nicht erreicht werden, bietet sich hier in bevorzugter Ausgestaltung der Erfindung die Luftverteilung in die Seitenwangenbereiche eines Sitzteiles oder einer Rückenlehne durch die im Basisteil angeordnete Verteilkanäle an, die ausgehend von den in den Randbereichen befindlichen Lufthauptkanälen in die Seitenwangenbereiche geführt werden können.

Die zwischen der Sitzstruktur und der Oberschicht.verlaufenden Lufthauptkanäle sind vorzugsweise zylindrisch ausgeführt, können jedoch selbstverständlich von dieser Form abweichen. Die Lufthauptkanäle sind insbesondere im Bereich der sich anschließenden Verteilkanäle mit einem erweiterten Umfang, beispielsweise in Form einer Senkung der Lufthauptkanäle, ausführbar, so dass entsprechend viele Verteilkanäle anschließbar sind.

Erfindungsgemäß sind die Luftverteilkanäle ebenfalls in ihrer Tiefe und Breite in der ausgebildeten Netzstruktur in vorgebbaren Teilbereichen unterschiedlich ausbildbar, so dass Strömungsgeschwindigkeiten und Luftvolumina durch entsprechend vorgegebene Größenverhältnisse der Lufthauptkanäle und Verteilkanäle steuerbar sind.

Zudem besteht die Möglichkeit, das Basisteil sozusagen in seiner Höhe (Sitzteil) beziehungsweise Tiefe (Rückenlehne) unterschiedlich, beispielsweise gestuft, auszuführen und in tieferen Bereichen eine ein- der mehrschichtige Klimaschicht anzuordnen, während in den höheren gestuften Bereichen auf eine Klimaschicht verzichtet wird, so dass letztlich wieder eine flächige Auflage für die Oberschicht gegeben ist.

Ferner ist auch denkbar, dass das Basisteil die Kontur eines Sitzenden bzw. die Kontur des Rückenbereiches eines Sitzenden nachbildet, wodurch die Lufthauptkanäle bzw. die Verteilkanäle nicht auf einer einzigen ebenen Fläche angeordnet sind, sondern sich entsprechend der Kontur anpassen, wobei letztlich wiederum eine im Wesentlichen gerade, ebene Oberfläche des Sitzteiles und/oder der Rückenlehne entsteht, in dem die Klimaschicht/Zwischenklimaschicht und/oder die Oberschicht des Sitzteiles beziehungsweise der Rückenlehne für entsprechenden Ausgleich sorgt.

Die Erfindung wird nachfolgend in Ausführungsbeispielen anhand der zugehörigen Zeichnungen näher erläutert. Es zeigen:
- Figur 1: eine Draufsicht auf ein Basisteil eines Rückenlehnen-Polsterteiles mit einem Luftverteilsystem in einer netzartigen Struktur aus Lufthauptkanälen und Verteilkanälen;
- Figur 2: einen Schnitt A-A durch das Rückenlehnen-Polster gemeinsam mit einer in Figur 1 nicht dargestellten Oberschicht;
- Figur 3: einen Schnitt A-A durch das Rückenlehnen-Polster gemeinsam mit einer in Figur 1 nicht dargestellten Oberschicht und einem Heizleiter und
- Figur 4: einen Schnitt A-A durch das Rückenlehnen-Polster gemeinsam mit einer in Figur 1 nicht dargestellten Oberschicht und einem Heizleiter und einer Klimaschicht.

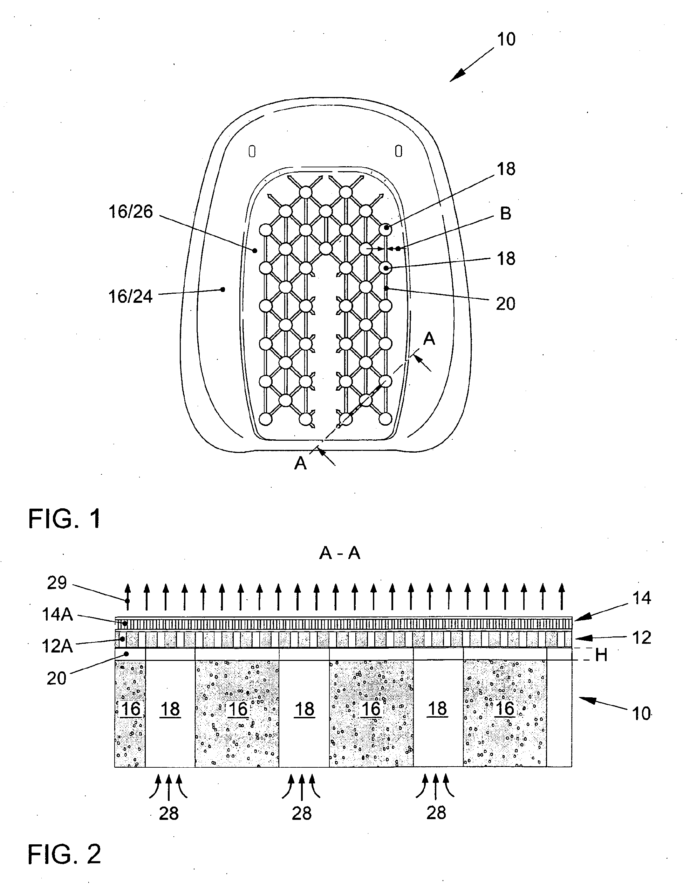

Figur 1 zeigt zunächst eine Draufsicht auf ein Polster-Basisteil 16 einer Rückenlehne 10. Die Figur 1 verdeutlicht zunächst beispielhaft eine netzartige Struktur aus Lufthauptkanälen 18 und Verteilkanälen 20. Hier sind die Lufthauptkanäle 18 so angeordnet, dass ein Versatz zwischen den Zeilen in die zwischenliegenden Spalten erfolgt ist. Daraus ergibt sich die dargestellte netzartige Struktur. In den Zeilen liegende Lufthauptkanäle 18 sind nicht direkt miteinander verbunden. Unter Verbindung auch dieser Lufthauptkanäle 18 und sich kreuzender Verteilkanäle 20 besteht aber beispielsweise eine Möglichkeit das Luftverteilsystem 18, 20 noch "flächiger" zu gestalten. Weitere Möglichkeiten ergeben sich je nach Anordnung der Lufthauptkanäle 18 und der Verteilkanäle 20, die hier nicht alle beschrieben werden können.

Die Anzahl der Lufthauptkanäle und Verteilkanäle 18, 20 ist variabel, so dass erfindungsgemäß auch weniger Lufthauptkanäle 18 anordbar sind, die durch mehrere Verteilkanäle 20 miteinander verbunden werden und umgekehrt.

Die Rückenlehne 10 weist einen Spiegel 26 und einen Randbereich 24 auf, wobei die Erfindung zur passiven Klimatisierung mit erhöhter Stabilität das Polster-Basisteiles 16 nicht auf den Spiegel 26 reduziert ist, sondern auch im Randbereich 24 ausführbar ist. Bei dieser Ausführung kann auf einen Schnittschaum verzichtet werden, in dem das gesamte Polster-Basisteil 16 als Formschaum ausgeführt ist, in dem das entsprechende Luftverteilsystem 18, 20 ausgeführt ist.

Figur 1 zeigt mit B bezeichnet die Breite eines Verteilkanals 20, die, wie bereits vorne beschrieben, hinsichtlich Tiefe und Breite variabel, in jeweils vorgebbaren Bereichen, ausführbar sind. Durchmesser und Form sowie Ausführung der Anschlussbereiche zwischen Lufthauptkanal 18 und Verteilkanal 20 sind ebenfalls variabel und in Figur 1 aus Übersichtlichkeitsgründen nicht weiter dargestellt.

In Figur 1 sind die weiteren Ausführungsformen, die in Verbindung mit dem erfindungsgemäßen Polster-Basisteil 16 ausführbar sind, nicht dargestellt. Dazu dienen die Schnitte in Figur 2, Figur 3 und Figur 4.

Figur 2 zeigt also gemäß Schnitt A-A der Figur 1 beispielhaft einen Schnitt durch ein Rückenlehnen-Polster aus Polster-Basisteil 16 und Oberschicht 12, 14 in einer ersten Ausführungsform, hier noch ohne Klimaschicht, die auch nicht notwendiger Weise angeordnet werden muss, da der Wirkungsgrad der Klimatisierung mit der erfindungsgemäßen Ausführung des Luftverteilsystems 18, 20 ansteigt. Das Basisteil ist wiederum mit dem Bezugszeichen 16 versehen ist. Zwischen den Lufthauptkanälen 18 verlaufen die Verteilkanäle 20 in den oben beschrieben Anordnungsvarianten, wobei das Polster-Basisteil 16 ebenfalls als elastisches und luftdurchlässiges Polster aus einem für diese Einsatzfälle vorgesehenen Schaum ausgebildet ist.

Im Schaum des Polster-Basisteiles 16 sind die Lufthauptkanäle 18 sichtbar, die sich zwischen einer nicht dargestellten Sitzstruktur und der ersten Oberschichtlage 12, der Oberschicht 12, 14 erstrecken. Die zweite Oberschichtlage 14 der Oberschicht 12, 14 ist vorzugsweise ein textiler Bezugsstoff oder ein Leder oder dergleichen, an dem ein Schaum der ersten Oberschichtlage 12A entweder separat angeordnet ist oder entsprechend ankaschiert worden ist.

Die Bezugszeichen 12A und 14A verdeutlichen die entsprechenden Perforierungen/Lochungen der Oberschichtlagen 12, 14, die zusätzlich zur natürlichen Luftdurchlässigkeit die Klimatisierung des Polsterteiles verbessern. Mit dem Bezugszeichen 28 ist die Strömungsrichtung des passiven Klimasitzes an der beispielhaft dargestellten Rückenlehne 10 verdeutlicht, wobei der Luftausgang mit dem Bezugszeichen 29 gekennzeichnet ist.

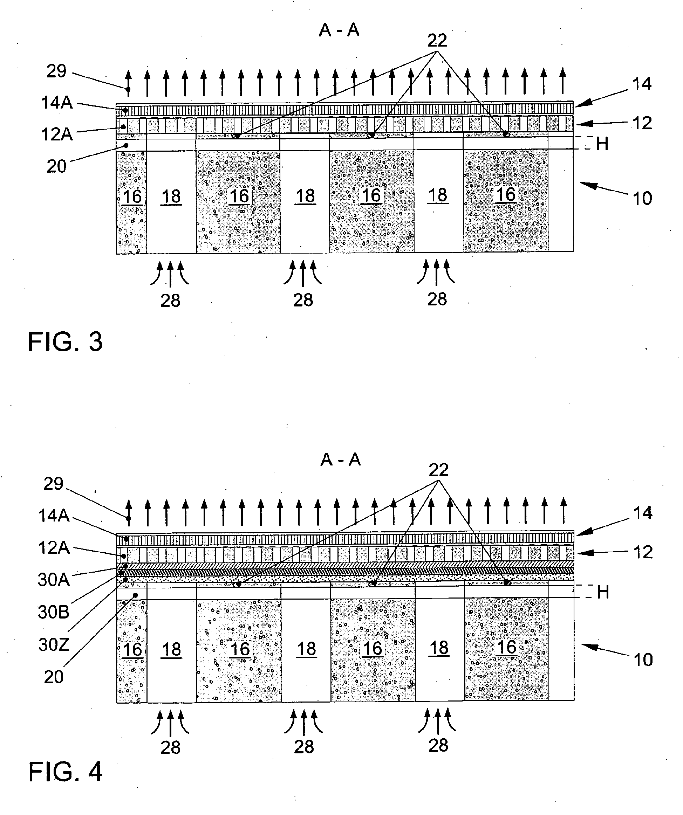

Figur 3 zeigt im Schnitt A-A, analog zur Figur 2, die erste Ausführungsform aus Polster-Basisteil 16 mit integriertem Luftverteilsystem 18, 20 und einer zweischichtigen Oberschicht 12, 14 mit zusätzlich angeordnetem Heizleiter 22, der vorzugsweise auf dem Polster-Basisteil 16 anordbar ist und unterhalb der ersten Oberschichtlage 12 liegt. Der Heizleiter 22 sollte dabei so angeordnet werden, dass die entsprechenden Perforationen 12A, insofern von den Größenverhältnissen her möglich, in der ersten Oberschichtlage 12 nicht verdeckt werden.

Figur 4 zeigt nun in einer Komplettübersicht eine Kombination einer zweiten und dritten Ausführungsform, die insofern aus der ersten Ausführungsform modifiziert wurde, dass zwischen der Oberschicht 12, 14 und dem Polster-Basisteil 16 mit dem Luftverteilsystem 18, 22 nun der Klimaschichtaufbau (30A, 30B) ausgebildet ist, der aus einer Klimateilschicht 30A, der Oberschicht 12, 14 zugewandt, und einer zweiten Klimateilschicht 30B, dem Polster-Basisteil 16 zugewandt, und alternativ in der dritten Ausführungsform eine zusätzliche Zwischenklimaschicht 30Z aufweist. Die Klimateilschichten 30A, 30B können entsprechend einzeln ausgeführt werden oder mit der Zwischenklimaschicht 30Z kombiniert werden.

Ausführbar ist eine erste Klimateilschicht 30A oder eine zweite Klimateilschicht 30B mit oder ohne Zwischenklimaschicht 30Z oder eine Ausführung der ersten und zweiten Klimateilschicht 30A, 30B mit oder ohne Zwischenklimaschicht 30Z. Die dreischichtige Ausführung 30A, 30B, 30Z ist in Figur 4 als dritte Ausführungsform gezeigt.

Die in Figur 4 dargestellte Ausführung eines Polsterteiles mit der entsprechenden Oberschicht 12, 14 ist selbstverständlich mit und ohne Heizleiterausführung 22 ausführbar.

Die entsprechenden Materialien die für die Klimateilschichten und die Zwischenklimaschicht zum Einsatz kommen sind bereits vorne beschrieben worden.

Die Größenverhältnisse der entsprechenden Schichten in Figur 4 sind nicht maßstabsgetreu, so dass insbesondere bei der Ausbildung der Oberschicht und der Klimaschicht darauf zu achten ist, dass der Komfort des Sitzteiles und/oder der Rückenlehne nicht unter der Auswahl eines zu weichen Schichtenaufbaus 12, 14, 30A, 30B, 30Z, insbesondere des Polster-Basisteiles 16 leidet. Die elastischen Rückstellkräfte der entsprechend vorne beschriebenen ausgewählten Materialvarianten sind für den Komfort ausschlaggebend, wobei erfindungsgemäß sichergestellt ist, dass das Polster-Basisteil 16 mit seinem vorteilhaften Luftverteilsystem 18, 20 eine Grundstabilität als Polsterunterbau gewährleistet.

Wie bereits beschrieben, ist dieser Schichtenaufbau, dargestellt in Figuren 2, 3 und 4, nicht nur für den Spiegel 26 eines Sitzteiles oder einer Rückenlehne, sondern auch für den Randbereich 24 ausbildbar. Die Seitenwangen können ebenfalls, da sie zumindest teilweise nicht von der Sitzstruktur unterbaut sind unter Zuführung der Luft vorzugsweise über die Verteilkanäle erreicht werden.

Außerdem sei erwähnt, dass eine Ausbildung des Polster-Basisteiles 16 mit Lufthauptkanälen 18 und Verteilkanälen 20 trotz hoher Stabilität eine Materialersparnis bewirkt.

Schließlich eignet das beschriebene Polsterteil mit seinem passiven Klimasystem "passiver Klimasitz" auch bei Einsatz bekannter Aktorik, Ventilatoren usw. als Polsterteil mit einem aktiven Klimasystem "Aktiver Klimasitz".

### Bezugszeichenliste

- 10: Rückenlehne
- 12: Oberschicht - erste Oberschichtlage [Kaschierschaum]
- 12A: Lochung der ersten Oberschichtlage
- 14: Oberschicht - zweite Oberschichtlage [Bezugsstoff]
- 14A: Lochung der zweiten Oberschichtlage
- 16: Polster-Basisteil
- 18: Lufthauptkanal
- 20: Verteilkanal
- 22: Heizleiter
- 24: Randbereich
- 26: Spiegel
- 28: Lufteingang
- 29: Luftausgang
- 30: Klimaschicht
- 30A: erste Klimateilschicht (Oberschicht 12, 14 zugewandt)
- 30B: zweite Klimateilschicht (Basisteil 16 zugewandt)
- 30Z: Zwischenklimaschicht

## Patentansprüche

1. Polsterteil für ein Sitzteil und/oder eine Rückenlehne, insbesondere für einen klimatisierbaren Fahrzeugsitz, das ein elastisches und luftdurchlässiges Polster-Basisteil (16) und mindestens eine flächig auf dem Polster-Basisteil (16) angeordnete Oberschicht (12, 14) aufweist, wobei die mindestens eine Oberschicht (12, 14) mindestens eine dem Polster-Basisteil (16) zugekehrte jeweils ebenfalls elastische und luftdurchlässige erste Oberschichtlage (12) und eine auf der ersten Oberschichtlage (12) flächig angeordnete zweite Oberschichtlage (14) umfasst, wobei_sich im Polster-Basisteil (16) mehrere sich zwischen einer Sitzstruktur in Richtung der Oberschicht (12, 14) erstreckende Lufthauptkanäle (18) ausgebildet sind, die gleichmäßig verteilt auf einer zur Klimatisierung vorgesehenen Fläche (24, 26) des Polsterteiles angeordnet sind und jeder Lufthauptkanal (18) in Strömungsrichtung an der ersten Oberschichtlage (12) endet, **dadurch gekennzeichnet, dass** in das Polster-Basisteil (16) zur flächigen Verteilung der Luft an der Oberschicht (12, 14) ein Luftverteilsystem (18, 20) integriert ist, indem zwischen den mehreren-Lufthauptkanälen (18) im Polster-Basisteil (16) mehrere ebenfalls im Polster-Basisteil (16) eingebrachte zur ersten Oberschichtlage (12) gerichtete offene Verteilkanäle (20) angeordnet sind, die an jedem Lufthauptkanal (18) in mehreren Abgängen sternförmig von einem zu einem nächsten Lufthauptkanal (18) geführt sind, wodurch insgesamt auf der zur Klimatisierung vorgesehenen Fläche (24, 26) eine netzartige Struktur des Luftverteilsystems (18, 20) ausgebildet ist.

2. Polsterteil nach Anspruch 1, **dadurch gekennzeichnet, dass** zur Erreichung der Luftdurchlässigkeit der Oberschicht (12, 14) zusätzlich zur materialbedingten Luftdurchlässigkeit jeweils in der ersten und/oder zweiten Oberschichtlage (12, 14) eine Lochung (Perforation) (12A, 14A) vorgesehen ist.

3. Polsterteil nach Anspruch 1, **dadurch gekennzeichnet, dass** zwischen Polster-Basisteil (16) und erster Oberschichtlage (12) in der dafür vorgesehenen Fläche (24, 26) ein Heizleiter (22) angeordnet ist, der vorzugsweise die Perforation (12A) der ersten Oberschichtlage (12) nicht verdeckt.

4. Polsterteil nach Anspruch 1, **dadurch gekennzeichnet, dass** die zweite Oberschichtlage (14) ein Bezugsmaterial, vorzugsweise ein textile Oberware oder Leder ist.

5. Polsterteil nach Anspruch 1, **dadurch gekennzeichnet, dass** die erste Oberschichtlage (12) ein Schaum ist.

6. Polsterteil nach Anspruch 4 und 5, **dadurch gekennzeichnet, dass** die Oberschicht ein Bezugsmaterial (14) mit einem ankaschierten Schaum (12) ist.

7. Polsterteil nach Anspruch 1, **dadurch gekennzeichnet, dass** eine Anordnung des Luftverteilungssystems (12A, 14A, 18, 20) im Randbereich (24) und/oder Spiegel (26) des Sitzteiles und/oder der Rückenlehne ausführbar ist.

8. Polsterteil nach Anspruch 1, **dadurch gekennzeichnet, dass** das elastische und luftdurchlässige Polster-Basisteil (16) eine flächig zumindest teilweise auf dem Polster-Basisteil (16) angeordnete luftdurchlässige Klimaschicht (30) aufweist, die zwischen dem Polster-Basisteil (16) und der ein- oder mehrschichtigen Oberschicht (12, 14) angeordnet ist

9. Polsterteil nach Anspruch 8, **dadurch gekennzeichnet, dass** die Klimaschicht (30), mindestens zwei Klimateilschichten (30A, 30B) umfasst, wobei die zweite Klimateilschicht (30B) dem Polster-Basisteil (16) und die erste Klimateilschicht (30A) der ein- oder mehrschichtigen Oberschicht (12, 14) zugekehrt ist

10. Polsterteil nach Anspruch 9, **dadurch gekennzeichnet, dass** die erste Klimateilschicht (30A) zumindest anteilig Aktivkohle enthält, die in Partikelform eingebracht ist.

11. Polsterteil nach Anspruch 9, **dadurch gekennzeichnet, dass** die erste Klimateilschicht (30A) zumindest anteilig ein feuchtigkeitsabsorbierendes Material enthält.

12. Polsterteil nach einem der Ansprüche 9 bis 11, **dadurch gekennzeichnet, dass** die erste Klimateilschicht (30A) zumindest anteilig ein Vlies, ein hydrophiliertes Textilmaterial, Gummihaar enthält.

13. Polsterteil nach einem der Ansprüche 9 bis 11, **dadurch gekennzeichnet, dass** die erste Klimateilschicht (30A) ein Trägermaterial aufweist, insbesondere ein Schaum ist, in den zumindest anteilig eingebrachter Aktivkohle eingebracht ist, wobei das Trägermaterial vorzugsweise mit einem Vlies vernadelt ist.

14. Polsterteil nach Anspruch 9, **dadurch gekennzeichnet, dass** die zweite Klimateilschicht (30B) aus einem weichen gering verpressten Gummihaar oder aus einem Kunststoff-Gewirk ausgebildet ist.

15. Polsterteil nach Anspruch 8 bis 14, **dadurch gekennzeichnet, dass** zwischen dem Polster-Basisteil (16) und der zweiten Klimateilschicht (30B) eine Zwischenklimaschicht (30Z) aus einem luftdurchlässigen Material angeordnet ist, wobei die erste und zweite Klimateilschicht (30A, 30B) relativ weicher und die Zwischenschicht (30Z) relativ härter als das Polster-Basisteil (16) ausgebildet ist, so dass bei Sitzbelastung ein Eindrücken der ersten Klimateilschicht (30A) und/oder zweiten Klimateilschicht (30B) und der Zwischenklimaschicht (30Z) in die Luftkanäle (18, 20) vermieden wird.

## Claims

1. Upholstered element for a seat element and/or a seat back, in particular for an air-conditionable vehicle seat, having an elastic and air-permeable upholstered basic element (16) and at least one top layer (12, 14) which is disposed in a planar manner on the upholstered basic element (16), wherein the at least one top layer (12, 14) comprises at least one likewise elastic and air-permeable first top-layer tier (12), which faces the upholstered basic element (16), and a second top-layer tier (14) which is disposed in a planar manner on the first top-layer tier (12), wherein a plurality of main air ducts (18) which extend between a seat structure in the direction of the top layer (12, 14) and which are disposed so as to be uniformly distributed across a surface (24, 26) of the upholstered part provided for air conditioning are configured in the upholstered basic element (16), and each main air duct (18) in the flow direction ends at the first top layer tier (12), **characterized in that** an air-distribution system (18, 20) for the planar distribution of the air on the top layer (12, 14) is integrated in the upholstered basic element (16), **in that** a plurality of open distribution ducts (20) which are likewise incorporated in the upholstered basic element (16) and directed towards the first top layer (12) and which on each main air duct (81) are guided in a plurality of outflows in a star-shaped manner from one to a next main air duct (18) are disposed between the plurality of main air ducts (18) in the upholstered basic element (16), on account of which an overall net-like structure of the air-distribution system (18, 20) is configured on the surface (24, 26) provided for air conditioning.

2. Upholstered element according to Claim 1, **characterized in that**, in order to achieve the air permeability of the top layer (12, 14), in addition to the material-dependent air permeability, a perforation (12A, 14A) is provided in each case in the first and/or second top-layer tier (12, 14).

3. Upholstered element according to Claim 1, **characterized in that** a heat conductor (22) which preferably does not cover the perforation (12A) of the first top-layer tier (12) is disposed between the upholstered basic element (16) and the first top-layer tier (12), in the surface (24, 26) provided therefor.

4. Upholstered element according to Claim 1, **characterized in that** the second top-layer tier (14) is a covering material, preferably a textile upper material or leather.

5. Upholstered element according to Claim 1, **characterized in that** the first top-layer tier (12) is a foam material.

6. Upholstered element according to Claims 4 and 5, **characterized in that** the top layer is a covering material (14) having a foam material (12) laminated thereonto.

7. Upholstered element according to Claim 1, **characterized in that** an arrangement of the air-distribution system (12A, 14A, 18, 20) is implementable in the peripheral region (24) and/or the face side (26) of the- seat element and/or the seat back.

8. Upholstered element according to Claim 1, **characterized in that** the elastic and air-permeable upholstered basic element (16) has an air-permeable climatic layer (30) which is at least partially disposed in a planar manner on the upholstered basic element (16) and which is disposed between the upholstered basic element (16) and the single-layer or multiple-layer top layer (12, 14).

9. Upholstered element according to Claim 8, **characterized in that** the climatic layer (30) comprises at least two climate part-layers (30A, 30B), wherein the second climate part-layer (30B) faces the upholstered basic element (16), and the first upholstered part-layer (30A) faces the single-layer or multiple-layer top layer (12, 14).

10. Upholstered element according to Claim 9, **characterized in that** the first climate part-layer (30A) contains at least in a proportion activated carbon which is incorporated in particle form.

11. Upholstered element according to Claim 9, **characterized in that** the first climatic layer (30A) at least in a proportion contains a moisture-absorbing material.

12. Upholstered element according to one of Claims 9 to 11, **characterized in that** the first climatic layer (30A) at least- in a proportion contains a non-woven material, a hydrophilic textile material, rubberized hair.

13. Upholstered element according to one of Claims 9 to 11, **characterized in that** the first climatic layer (30A) has a carrier material, in particular is a foam material, in which activated carbon which is incorporated at least in a proportion is incorporated, wherein the carrier material preferably is needle-bonded to a non-woven material.

14. Upholstered element according to Claim 9, **characterized in that** the second climatic layer (30B) is configured from soft, lightly compressed rubberized hair or from plastic knitwear.

15. Upholstered element according to Claims 8 to 14, **characterized in that** an intermediate climatic layer (30Z) of an air-permeable material is disposed between the upholstered basic element (16) and the second climatic layer (30B), wherein the first and second climatic layers (30A, 30B) are comparatively softer and the intermediate layer (30Z) is comparatively firmer than the upholstered basic element (16), such that in the case of stress on the seat, forcing of the first climatic layer (30A) and/or the second climatic layer (30B) and of the intermediate climatic layed (30Z) into the air ducts (18, 20) is avoided.

## Revendications

1. Pièce de capitonnage pour une partie de siège et/ou un dossier, en particulier pour un siège de véhicule climatisable, qui présente une partie de base de capitonnage élastique et perméable à l'air (16) et au moins une couche supérieure (12, 14) disposée à plat sur la partie de base de capitonnage (16), l'au,moins une couche supérieure (12, 14) comprenant au moins une première strate de couche supérieure (12) également élastique et perméable à l'air, tournée vers la partie de base de capitonnage (16) et une deuxième strate de couche supérieure (14) disposée à plat sur la première strate de couche supérieure (12), plusieurs canaux d'air principaux (18) s'étendant entre une structure de siège dans la direction de la couche supérieure (12, 14) étant réalisés dans la partie de base de capitonnage (16), lesquels sont répartis uniformément sur une surface (24, 26) de la pièce de capitonnage prévue pour la climatisation, et chaque canal d'air principal (18) se terminant dans la direction d'écoulement au niveau de la première strate de couche supérieure (12), .**caractérisée en ce qu'**un système de distribution d'air (18, 20) est intégré dans la partie de base de capitonnage (16) pour la distribution plate de l'air sur la couche supérieure (12, 14), plusieurs canaux de distribution ouverts (20) orientés vers la première strate de couche supérieure (12) et également intégrés dans la partie de base de capitonnage (16) étant disposés entre la pluralité de canaux d'air principaux (18) dans la partie de base de capitonnage (16), lesquels sont guidés au niveau de chaque canal d'air principal (18) dans plusieurs sorties en forme d'étoile depuis un canal d'air principal (18) à l'autre, de sorte que dans l'ensemble, sur la surface (24, 26) prévue pour la climatisation, soit réalisée une structure en forme de réseau du système de distribution d'air (18, 20).

2. Pièce de capitonnage selon la revendication 1, **caractérisée en ce que** pour réaliser la perméabilité à l'air de la couche supérieure (12, 14), on prévoit, en plus de la perméabilité à l'air intrinsèque du matériau, un système de trous (perforations) (12A, 14A) à chaque fois dans la première et/ou la deuxième strate de couche supérieure (12, 14).

3. Pièce de capitonnage selon la revendication 1, **caractérisée en ce qu'**entre la partie de base de capitonnage (16) et la première strate de couche supérieure (12) dans la surface prévue à cet effet (24, 26) est disposé un conducteur chauffant (22) qui, de préférence, ne recouvre pas les perforations (12A) de la première strate de couche supérieure (12).

4. Pièce de capitonnage selon la revendication 1, **caractérisée en ce que** la deuxième strate de couche supérieure (14) est un matériau de revêtement, de préférence une nappe supérieure textile ou du cuir.

5. Pièce de capitonnage selon la revendication 1, **caractérisée en ce que** la première strate de couche supérieure (12) est une mousse.

6. Pièce de capitonnage selon les revendications 4 et 5, **caractérisée en ce que** la couche supérieure est un matériau de revêtement (14) avec une mousse (12) contrecollée.

7. Pièce de capitonnage selon la revendication 1, **caractérisée en ce qu'**un agencement du système de distribution d'air (12A, 14A, 18, 20) peut être réalisé dans la région de bord (24) et/ou le rétroviseur (26) de la partie de siège et/ou du dossier.

8. Pièce de capitonnage selon la revendication 1, **caractérisée en ce que** la partie de base de capitonnage élastique et perméable à l'air (16) présente une couche de climatisation perméable à l'air (30) disposée à plat au moins en partie sur la partie de base de capitonnage (16), laquelle est disposée entre la partie de base de capitonnage (16) et la couche supérieure (12, 14) monocouche ou multicouche.

9. Pièce de capitonnage selon la revendication 8, **caractérisée en ce que** la couche de climatisation (30) comprend au moins deux couches partielles de climatisation (30A, 30B), la deuxième couche partielle de climatisation (30B) étant tournée vers la partie de base de capitonnage (16) et la première couche partielle de climatisation (30A) étant tournée vers la couche supérieure (12, 14) monocouche ou multicouche.

10. Pièce de capitonnage selon la revendication 9, **caractérisée en ce que** la première couche partielle de climatisation (30A) contient au moins des proportions de charbon actif qui sont introduites sous forme particulaire.

11. Pièce 'de capitonnage selon la revendication 9, **caractérisée en ce que** la première couche partielle de climatisation (30A) contient au moins des proportions d'un matériau absorbant l'humidité.

12. Pièce de capitonnage selon l'une quelconque des revendications 9 à 11, **caractérisée en ce que** la première couche partielle de climatisation (30A) contient au moins des proportions d'un non-tissé, d'un matériau textile hydrophilisé, de poils en caoutchouc.

13. Pièce de capitonnage selon l'une quelconque des revendications 9 à 11, **caractérisée en ce que** la première couche partielle de climatisation (30A) présente un matériau de support, en particulier est une mousse dans laquelle est introduit du charbon actif introduit au moins dans certaines proportions, le matériau de support étant de préférence aiguilleté avec un non-tissé.

14. Pièce de capitonnage selon la revendication 9, **caractérisée en ce que** la deuxième couche partielle de climatisation (30B) est réalisée à partir de poils de caoutchouc souples faiblement pressés ou à partir d'un tissu à mailles en plastique.

15. Pièce de capitonnage selon les revendications 8 à 14, **caractérisée en ce qu'**entre la partie de base de capitonnage (16) et la deuxième couche partielle de climatisation (30B) est disposée une couche de climatisation intermédiaire (30Z) en un matériau perméable à l'air, la première et la deuxième couche partielle de climatisation (30A, 30B) étant relativement plus souples et la couche intermédiaire (30Z) étant relativement plus dure que la partie de base de capitonnage (16), de telle sorte que dans le cas d'une sollicitation du siège, un enfoncement de la première couche partielle de climatisation (30A) et/ou de la deuxième couche partielle de climatisation (30B) et de la couche de climatisation intermédiaire (30Z) dans les canaux d'air (18, 20) soit évité.
